(19)

(11) **EP 3 578 393 B1**

(12) **EUROPÄISCHE PATENTSCHRIFT**

(45) Veröffentlichungstag und Bekanntmachung des Hinweises auf die Patenterteilung:
**13.01.2021 Patentblatt 2021/02**

(51) Int Cl.:
***B60C 11/16*** *(2006.01)*

(21) Anmeldenummer: **19172154.7**

(22) Anmeldetag: **02.05.2019**

(54) **SPIKE**

SPIKE

CRAMPON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2018 DE 102018208903**

(43) Veröffentlichungstag der Anmeldung:
**11.12.2019 Patentblatt 2019/50**

(73) Patentinhaber: **Continental Reifen Deutschland GmbH**
**30165 Hannover (DE)**

(72) Erfinder:
- **Schlittenhard, Jan**
  **30165 Hannover (DE)**
- **Kötter, Maik**
  **30165 Hannover (DE)**
- **Spechtmeyer, Torben**
  **30165 Hannover (DE)**
- **Gümmer, Oliver**
  **30165 Hannover (DE)**
- **Koch, Tim**
  **30165 Hannover (DE)**
- **Ludwig, Jens**
  **39165 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**RU-C1- 2 152 318**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 578 393 B1

## Beschreibung

Die Erfindung betrifft einen Spike zum Verankern im Laufstreifen eines Fahrzeugreifens mit einem Oberflansch, einem Fußflansch und einem Spikepin, wobei der Fußflansch zumindest eine Symmetrieebene und zumindest zwei in Draufsicht symmetrisch zur Symmetrieebene verlaufende, ebene Seitenflächen aufweist, wobei der Spikepin und/oder der Oberflansch bezüglich der Symmetrieebene des Fußflansches und/oder bezüglich einer zu dieser Symmetrieebene senkrecht verlaufenden, die Hauptachse des Spikes enthaltenden zweiten Ebene asymmetrisch ausgeführt sind bzw. ist.

Aus der DE 10 2015 223 091 A1 ein Spike mit einem Fuß flansch der eingangs genannten Art bekannt. Der Fußflansch weist zwei parallel zueinander verlaufende Seitenflächen auf, welche in Draufsicht bezüglich einer die Hauptachse des Spikes enthaltenden Ebene zueinander symmetrisch verlaufen. Ferner ist aus der WO 2015/139860 A1 ein Spike mit einem Spikepin bekannt, welcher in Draufsicht auf seine Oberseite ein langgestreckter Körper ist, wobei der Körper nur eine Symmetrieebene aufweist, welche den Spikepin senkrecht zur Oberseite sowie in Längsrichtung des Spikepins halbiert. Der Spikepin ist daher bezüglich jeder senkrecht zur Symmetrieebene verlaufenden Ebene asymmetrisch ausgeführt.

Spikes der eingangs genannten Art sind in im Namen der Continental Reifen Deutschland GmbH kürzlich beim Europäischen Patentamt eingereichten, noch nicht veröffentlichten Anmeldungen offenbart. Solche Spikes können beispielsweise den aus der WO 2015/139860 A1 bekannten Spikepin in Kombination mit dem aus der DE 102015223091 A1 bekannten Fuß flansch aufweisen.

Aus der RU 2 152 318 C1 ist weiterhin ein Spike mit den Merkmalen des Oberbegriffs des Anspruchs 1 bekannt.

Ein Spike mit einem asymmetrischen Spikepin und/oder einem asymmetrischen Oberflansch weist am Laufstreifen eines Fahrzeugluftreifens eine - im Hinblick auf die Fahreigenschaften - besonders vorteilhafte Orientierung auf. Um den Spike in seiner bevorzugten Orientierung in den Laufstreifen einzusetzen, ist es erforderlich, den Spike in einer definierten Lage zur Spikesetzpistole zu transportieren. Mittels der aktuell bekannten Spikeförderer, beispielsweise Vibrationsförderer, ist es nicht möglich, Spikes in definierter Lage bzw. Orientierung auf einer zu einer Spikesetzpistole führenden Transporteinrichtung aufzulegen. Die Lage des Spikes auf der Transporteinrichtung könnte mittels eines Kamerasystems geprüft werden. Bei sehr ähnlichen Spikegeometrien ist jedoch eine zuverlässige Unterscheidung häufig nicht möglich oder nicht zuverlässig. Sind Spikes ausschließlich im Hinblick auf den Querschnitt ihres Spikepins asymmetrisch, ist ein Erkennen der korrekten Spikelage auf der Transporteinrichtung aktuell nicht zuverlässig möglich.

Der Erfindung liegt daher die Aufgabe zugrunde, einen Spike der eingangs genannten Art zu Verfügung zu stellen, bei welchem die Lage bzw. die Orientierung des Spikes auf einer Transporteinrichtung zuverlässig feststellbar ist.

Gelöst wird die gestellte Aufgabe erfindungsgemäß dadurch, dass am Oberflansch des Spikes zumindest ein Orientierungselement ausgebildet ist, welches dem auf einer ebenen Seitenfläche des Fußflansches liegenden Spike einen zur Symmetrieebene des Fußflansches asymmetrischen Schattenriss verleiht.

Beim Transport eines erfindungsgemäß ausgeführten Spikes von einem Vorratsbehälter zu einem zur Spikesetzpistole führenden Zuführrohr kann entlang der Transportstrecke dessen Lage mittels eines Kamerasystems zuverlässig erkannt werden. Der Spike wird sich auf der Transporteinrichtung auf eine der ebenen Seitenflächen seines Fußflansches legen. Durch den asymmetrischen Schattenriss des Spikes ist das Kamerasystem in der Lage, die Orientierung des Spikes auf der Transporteinrichtung zu detektieren. Ein falsch orientierter Spike wird von der Transporteinrichtung entfernt, beispielsweise mittels eines Luftdruckstoßes, sodass sichergestellt werden kann, dass ausschließlich korrekt orientierte Spikes zum Zuführrohr der Spikesetzpistole gelangen und der Spike nachfolgend in der gewünschten Orientierung in den Laufstreifen eingesetzt wird. Die erfindungsgemäß an den Spikes ausgebildeten Orientierungselemente haben keinen Einfluss auf die Bettungssteifigkeit des Spikes. Außerdem können die Orientierungselemente sehr klein ausgeführt werden, da bereits geringe Veränderungen des Schattenrisses für eine zuverlässige Detektion ausreichend sind, sodass die Orientierungselemente die Schnee- und Eisgriffeigenschaften der Spikes nicht beeinflussen.

Bevorzugter Weise grenzt das am Oberflansch ausgebildete Orientierungselement an den Fußflansch an. Durch diese Maßnahme weisen die Spikes eine besonders gleichmäßige Bettungssteifigkeit auf.

Gemäß einer ersten bevorzugten Ausführungsvariante ist das am Oberflansch ausgebildete Orientierungselement, in Draufsicht auf den Spike, ein den Fußflansch nicht überragender Vorsprung. Ein Vorsprung nimmt keinen oder nahezu keinen Einfluss auf die sonstigen Eigenschaften des Spikes.

In diesem Zusammenhang ist es ferner bevorzugt, wenn der Vorsprung in Draufsicht auf den Spike sichelförmig ist, da ein derart gestalteter Vorsprung besonders gut am Oberflansch anliegt.

Ferner ist es bei dieser Variante bevorzugt, wenn der Vorsprung eine gebogene Fläche aufweist, welche in der zweiten Ebene unter einem Winkel zur Hauptachse des Spikes geneigt ist, wobei der Winkel zu den Sichelenden der Sichelform des Vorsprunges kontinuierlich abnimmt und wobei die Fläche an den Sichelenden über ebene, zur Hauptachse geneigte Übergangsflächen tangential in die Mantelfläche des Oberflansches übergeht. Ein solcher Vorsprung ist nahezu eins mit dem Oberflansch, ist also besonders ideal an dessen Geometrie angepasst.

Ferner ist es bei dieser Variante von Vorteil, wenn der Vorsprung an seiner dicksten Stelle eine Dicke von 0,1 mm bis 1,0 mm, insbesondere von bis zu 0,5mm, aufweist.

Gemäß einer weiteren bevorzugten Ausführungsvariante ist das am Oberflansch ausgebildete Orientierungselement von einer Vertiefung und einer vorspringenden Überhöhung gebildet, wobei die Vertiefung und die Überhöhung eine gemeinsame Begrenzungsfläche aufweisen. Auch ein solches Orientierungselement nimmt keinen oder nahezu keinen Einfluss auf die sonstigen Eigenschaften des Spikes. Insbesondere können solche aus Vertiefung und Überhöhung gebildeten Orientierungselemente sehr vielseitig eingesetzt werden und sind vor allem auch bei komplexeren Oberflanschformen besonders vorteilhaft.

Dabei ist es ferner von Vorteil, wenn die Begrenzungsfläche derart ausgeführt ist, dass die Vertiefung im Querschnitt sichelförmig ist und wenn die Begrenzungsfläche im Bereich der Überhöhung im Querschnitt zumindest abschnittsweise gerade verläuft. Insbesondere wird dadurch dem Schattenriss eine charakteristische und gut detektierbare gerade Linie verliehen.

Außerdem ist es bevorzugt, wenn die Vertiefung an ihrer tiefsten Stelle eine Tiefe von 0,1 mm bis 1,0 mm, insbesondere von bis zu 0,5 mm, und wenn die Überhöhung an ihrer dicksten Stelle eine Dicke von 0,1 mm bis 1,0 mm, insbesondere von bis zu 0,5 mm, aufweist.

Eine weitere bevorzugte Ausführungsvariante ist dadurch gekennzeichnet, dass das am Oberflansch ausgebildete Orientierungselement eine am Rand der Oberseite des Oberflansches ausgebildete, eine Schrägfläche bildende Fase ist. Eine solche Fase verleiht dem Schattenriss eine zur Hauptachse des Spikes schräggestellte Linie.

Gemäß einer weiteren bevorzugte Ausführungsvariante ist vorgesehen, dass das am Oberflansch ausgebildete Orientierungselement eine am Rand der Oberseite des Oberflansches ausgebildete Abrundung ist. Eine solche Abrundung verleiht dem Schattenriss des Spikes am Rand der Oberseite des Oberflansches einen charakteristischen, detektierbaren Radius.

Bei sämtlichen Ausführungsvarianten ist es von Vorteil, wenn das am Oberflansch ausgebildete Orientierungselement eine parallel zur Hauptachse des Spikes ermittelte Länge von 0,5 mm bis 8,0 mm, insbesondere 2,0 mm bis 5,0 mm aufweist. Ein solches Orientierungselement weist eine gewisse Mindestgröße auf, wodurch auch die Lage von "besonders ungünstig", etwa schief, auf der Transporteinrichtung liegenden Spikes zuverlässige mittels des Kamerasystems detektierbar ist. Ein mögliche "Verschattung" des Orientierungselements ist dabei besonders unwahrscheinlich.

In diesem Zusammenhang ist es ferner vorteilhaft, wenn die zweite Ebene eine Symmetrieebene des Orientierungselementes ist. Die zweite Ebene enthält dabei die Hauptachse des Spikes und verläuft senkrecht zur zumindest einen Symmetrieebene des Fußflansches.

Gemäß einer weiteren bevorzugten Ausführungsvariante erstreckt sich das am Oberflansch ausgebildete Orientierungselement, in Draufsicht auf den Spike und bezogen auf die Hauptachse des Spikes, über einen Zentriwinkel von 10° bis 180°, insbesondere von mindestens 90°. Dadurch verleiht das Orientierungselement dem Spike einerseits den erwähnten asymmetrischen Schattenriss und ist anderseits in seiner Größe auf eine für die Bettungssteifigkeit des Spikes vorteilhafte Weise begrenzt.

Im Hinblick auf die Produktion der Spikes ist es von Vorteil, wenn der Zentriwinkel, über welchen sich das Orientierungselement in Draufsicht und bezogen auf die Hauptachse des Spikes erstreckt, $\frac{360}{n} \pm 1°$, beträgt, wobei gilt: n = 2, 3, 4, 5 oder 6.

Weitere Merkmale, Vorteile und Einzelheiten der Erfindung werden nun anhand der Zeichnung, die schematisch Ausführungsbeispiele der Erfindung zeigt, näher beschrieben. Dabei zeigen

Fig. 1a eine Schrägansicht eines Spikes gemäß einer ersten Ausführungsvariante der Erfindung,

Fig. 1b eine Draufsicht auf den Spike aus Fig. 1a,

Fig. 1c eine seitliche Ansicht des Spikes aus Fig. 1a in einer ersten liegenden Lage,

Fig. 1d eine seitliche Ansicht des Spikes aus Fig. 1a in einer zweiten liegenden Lage,

Fig. 2a eine Schrägansicht eines Spikes gemäß einer zweiten Ausführungsvariante der Erfindung,

Fig. 2b eine Draufsicht auf den Spike aus Fig. 2a,

Fig. 2c eine seitliche Ansicht des Spikes aus Fig. 2a in einer ersten liegenden Lage,

Fig. 2d eine seitliche Ansicht des Spikes aus Fig. 2a in einer zweiten liegenden Lage und

Fig. 2e eine Ansicht auf den Spike aus Fig. 2a in aufrechter Position.

Die in der nachfolgenden Beschreibung verwendeten Richtungsangaben, wie "oben", "unten" und dergleichen, beziehen sich jeweils auf den Spike in seiner aufrechten Position.

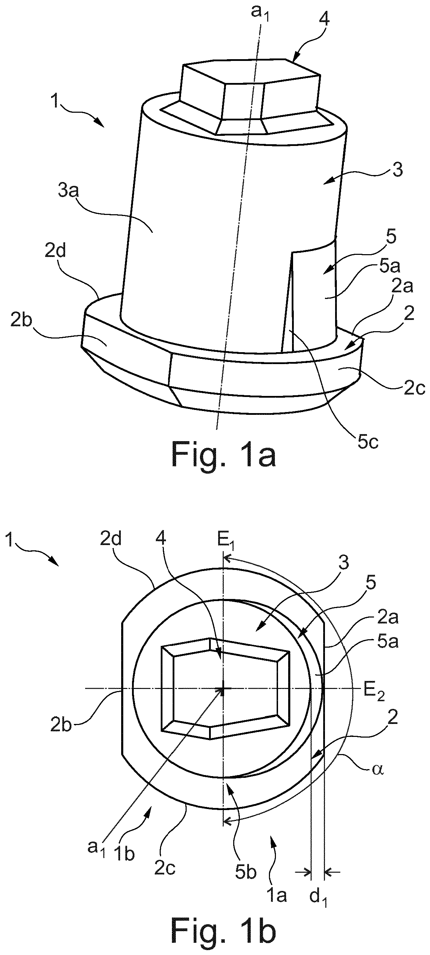

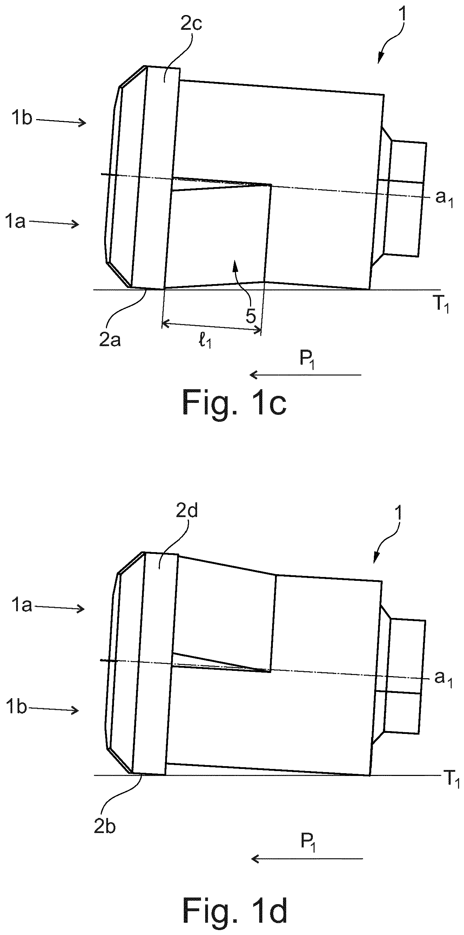

Fig. 1a und Fig. 1b zeigen einen Spike 1 mit einem Fußflansch 2, einem Oberflansch 3 und einem Spikepin 4. Ferner ist in Fig. 1a und Fig. 1b die in aufrechter Position des Spikes 1 in vertikaler Richtung verlaufende Hauptachse $a_1$ des Spikes 1 ein- bzw. gekennzeichnet. Der Fußflansch 2 weist in Draufsicht (Fig. 1b) eine im Wesentlichen ovale Form und zwei in der längeren Erstreckung des Ovals parallel zueinander verlaufende, ebene Seitenflächen 2a, 2b und zwei gerundete Seitenflächen 2c, 2d auf. Wie Fig. 1b zeigt, weist der Fußflansch 2 eine in seiner Längserstreckung ausgerichtete, parallel zu den ebenen Seitenflächen 2a, 2b und durch die Hauptachse $a_1$ des Spikes 1 verlaufende Symmetrieebene $E_1$ auf, welche in Fig. 1b einer vertikalen Line entspricht. Ferner weisen der Spike 1 und damit auch der Fuß flansch 2 eine durch die Hauptachse $a_1$ (siehe insbesondere Fig. 1c) und orthogonal zur Symmetrieebene $E_1$ verlaufende zweite Symmetrieebene $E_2$ auf, welche in Fig. 1b einer horizontalen Linie entspricht.

Wie insbesondere Fig. 1a zeigt, ist der Oberflansch 3 beim gezeigten Ausführungsbeispiel kreiszylindrisch oder zumindest annähernd kreiszylindrisch, weist eine Mantelfläche 3a auf und befindet sich mittig auf dem Fuß flansch 2. Der Spikepin 4 ist im Wesentlichen mittig im Oberflansch 3 verankert, ragt aus diesem in bekannter Weise heraus und ist in Draufsicht quer zur längeren Erstreckung des erwähnten Ovals des Fußflansches 2 orientiert (Fig. 1b). Gemäß Fig. 1b weist der Spikepin 4 zumindest außerhalb des Oberflansches 3 einen bezüglich der Symmetrieebene $E_2$ symmetrisch sechseckigen Querschnitt auf. Bezüglich der Symmetrieebene $E_1$ ist der sechseckige Querschnitt des Spikepins 4 derart asymmetrisch, dass sich in Fig. 1b in der durch die Symmetrieebene $E_1$ gebildeten rechten Spikehälfte 1a zwei Ecken des Sechseckes des Querschnittes und in der durch die Symmetrieebene $E_1$ gebildeten linken Spikehälfte 1b vier Ecken des Sechseckes befinden.

Die gewünschte und bevorzugte Orientierung des Spikes 1 im Laufstreifen eines Fahrzeugluftreifens ist derart, dass sich die Spikehälfte 1a näher zur Reifenäquatorialebene befindet als die Spikehälfte 1b, wobei die Symmetrieebene $E_1$ in Draufsicht zur Umfangsrichtung unter einem kleinen spitzen Winkel geneigt ist. Bezogen auf den im Laufstreifen eingesetzten Spike 1 ist die Spikehälfte 1b die laufstreifenaußenseitige Spikehälfte und die Spikehälfte 1a die laufstreifeninnenseitige Spikehälfte.

Wie Fig. 1a in Kombination mit Fig. 1b zeigt, ist in der unteren Hälfte des Oberflansches 3 auf der Mantelfläche 3a ein den Fußflansch 2 kontaktierender und diesen nicht überragender, flacher Vorsprung 5 ausgebildet, welcher, wie noch erläutert wird, als Orientierungselement dient. Der Vorsprung 5 wird bei der Herstellung des Spikes 1 mitgebildet und besteht daher vorzugsweise aus dem jeweiligen Material des Oberflansches 3.

Wie Fig. 1b zeigt, erstreckt sich der Vorsprung 5 in Draufsicht auf den Spike 1 symmetrisch zur Symmetrieebene $E_2$, wobei der Vorsprung 5 beim gezeigten Ausführungsbeispiel über die gesamte laufstreifeninnenseitige Spikehälfte 1a und daher über den halben Umfang des kreiszylindrischen Oberflansches 3 verläuft. Gemäß einer bevorzugten Ausführungsvariante erstreckt sich der Vorsprung 5 in Draufsicht und bezogen auf die Hauptachse $a_1$ über einen Zentriwinkel $\alpha$ von $180° \pm 1°$. Der Vorsprung 5 ist in Draufsicht im Wesentlichen sichelförmig, weist ferner einen langgezogenen, dreieckigen Querschnitt auf und ist durch eine gebogene Fläche 5a begrenzt. Die gebogene Fläche 5a ist zur Hauptachse $a_1$ des Spikes 1 unter einem spitzen Winkel geneigt, welcher ausgehend von der Ebene $E_2$ zu den beiden Sichelenden 5b der Sichelform des Vorsprunges 5 kontinuierlich abnimmt, wobei die Fläche 5a an den Sichelenden 5b über ebene, zur Hauptachse $a_1$ geneigte Übergangsflächen 5c tangential in die Mantelfläche des Oberflansches 3 übergeht (Fig. 1b).

Der Vorsprung 5 weist in Erstreckungsrichtung der Hauptachse $a_1$ eine Länge $l_1$ (Fig. 1c) von 0,5 mm bis 8,0 mm, insbesondere von 2,0 mm bis 5,0 mm, und besonders bevorzugter Weise von zirka 3,0 mm, auf. An seinem am Fuß flansch 2 liegenden Ende weist der Vorsprung 5 an seiner dicksten und gleichzeitig in der Symmetrieebene $E_2$ liegenden Stelle eine gegenüber dem Niveau der Mantelfläche des Oberflansches 3 ermittelte Dicke $d_1$ (Fig. 1b) von 0,1 mm bis 1,0 mm, insbesondere von bis zu 0,5 mm, und beim gezeigten Ausführungsbeispiel von 0,4 mm auf.

Um die Spikes 1 in die Spikelöcher eines Laufstreifen einen Fahrzeugluftreifens einzusetzen, werden schüttgutartig in einem Vorratsbehälter angesammelte Spikes 1, beispielsweise mittels eines Vibrationsförderers, auf eine Transporteinrichtung aufgebracht, auf welcher die Spikes 1 mit ihrem Fuß flansch 2 voran, flach liegend zu einem zu einer Spikesetzpistole führenden Zuführrohr transportiert werden. Der Querschnitt des Zuführrohres ist bekannter Weise auf die jeweilige Spikegeometrie abgestimmt, sodass sich asymmetrische Spikes im Zuführrohr nicht verdrehen können.

Aufgrund der senkrecht zueinander stehenden Symmetrieebenen $E_1$, $E_2$ des Fußflansches 2 kann der Spike 1 das Zuführrohr in zwei möglichen Orientierungen passieren. Der Spike 1 wird - je nach Orientierung - nachfolgend entweder derart in den Laustreifen eingesetzt, dass sich die Spikehälfte 1a, wie gewünscht, näher an der Reifenäquatorialebene befindet als die Spikehälfte 1b oder in genau umgekehrter Lage der Spikehälften 1a, 1b.

Wie nachfolgend anhand von Fig. 1c und Fig. 1d erläutert wird, dient der beschriebene Vorsprung 5 als Orientierungselement. In Fig. 1c und Fig. 1d ist durch eine Linie $T_1$ die erwähnte Transporteinrichtung angedeutet, die Transportrichtung ist durch eine Pfeil $P_1$ gekennzeichnet.

Wie Fig. 1c und Fig. 1d zeigen, wird sich ein auf die Transporteinrichtung aufgebrachter Spike 1 auf eine der beiden ebenen Seitenflächen 2a, 2b legen, da er über die gerundeten Seitenflächen 2c, 2d entsprechend "abrollt". Fig. 1c zeigt den Spike 1 auf der ebenen Seitenfläche 2a liegend, Fig. 1d zeigt den Spike 1 auf der ebenen Seitenfläche 2b liegend. Bezogen auf die Transportrichtung ist der Spike 1 mit seinem Fuß flansch 2 voran ausgerichtet, wobei eine derartige Ausrichtung in bekannter Weise mit hoher Zuverlässigkeit möglich ist. Ob der Spike 1 jedoch auf der Seitenfläche 2a oder auf der Seitenfläche 2b liegt, ist zufallsbedingt und mit den aktuell üblichen Fördereinrichtungen nicht steuerbar. Die genaue Lage des Spikes 1 beeinflusst unmittelbar seine nachfolgende Orientierung am Laufstreifen. Exemplarisch sei die in Fig. 1c gezeigte Lage des Spikes 1 die für den Setzvorgang gewünschte Lage und die in Fig. 1d gezeigte Lage des Spikes 1 die für den Setzvorgang unerwünschte Lage.

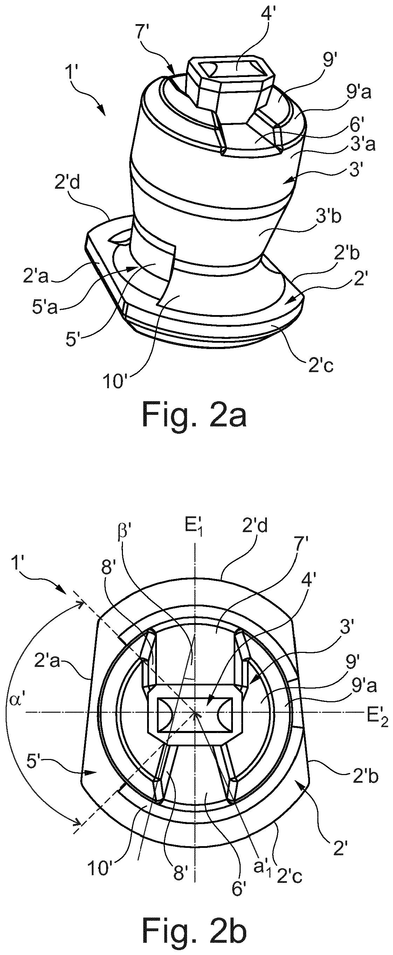

Der Spike 1 wird auf der Transporteinrichtung an einem in den Figuren nicht gezeigten Kamerasystem vorbeigeführt, welches den Schattenriss des Spikes 1 aufnimmt und analysiert. Wie ein Vergleich der Fig. 1c mit der Fig. 1d zeigt, verleiht der Vorsprung 5 dem Spike 1 einen von der Lage des Spikes 1 abhängigen Schattenriss. Die Analyse des aufgenommenen Schattenrisses erfolgt durch Vergleich mit einem "Referenzschattenriss", welcher zuvor aufgenommen wurde. Erkennt das Kamerasystem einen Spike 1 in der für den Setzvorgang gewünschten Lage (Fig. 1c) wird der Spike 1 zum Zuführrohr weitertransportiert. Erkennt das Kamerasystem einen Spike 1 in der für den Setzvorgang nicht erwünschten Lage (Fig. 1d) wird der Spike 1, insbesondere über einen aus einer entsprechenden Düse kommenden Luftdruckstoß, von der Transporteinrichtung in den Vorratsbehälter zurück transportiert. Derart ist sichergestellt, dass nur die auf der Transporteinrichtung korrekt ausgerichteten Spikes 1 zum Zuführrohr transportiert werden. Fig. 2a und Fig. 2b zeigen einen Spike 1' mit einem Fuß flansch 2', einem Oberflansch 3' und einem Spikepin 4'. Der Fuß flansch 2' weist in Draufsicht (Fig. 2b) eine im Wesentlichen ovale Form sowie zwei in der längeren Erstreckung des Ovals verlaufende, ebene Seitenflächen 2'a, 2'b und zwei gerundete Seitenflächen 2'c, 2'd auf. Wie Fig. 2b zeigt, weist der Fußflansch 2 eine in seiner Längserstreckung ausgerichtete und durch die in aufrechter Position des Spikes 1 in vertikaler Richtung orientierte Hauptachse $a_1$' des Spikes 1' verlaufende Symmetrieebene $E_1$' auf, welche in Fig. 2b einer vertikalen Linie entspricht. Die ebenen Seitenflächen 2'a, 2'b sind in Draufsicht derart gegenüber der Symmetrieebene $E_1$' geneigt, dass die Breite des Fußflansches 2' über die längere Erstreckung des Ovals kontinuierlich abnimmt, sodass die gerundete Seitenfläche 2'c länger ist als die gerundete Seitenfläche 2'd.

Der Oberflansch 3' ist im mittleren Bereich des Fußflansches 2' positioniert sowie bei der gezeigten Ausführung zylindrisch gestaltet und weist einen Oberteil 3'a mit konstantem Durchmesser und einen Unterteil 3'b auf (Fig. 2a), dessen Durchmesser ausgehend vom Durchmesser des Oberteils 3'a Richtung Fuß flansch 2' etwas geringer wird. Der Oberflansch 3' ist in Draufsicht auf den Spike 1' allseitig vom Fuß flansch 2', zum Teil nur geringfügig, überragt (Fig. 2b).

Der Oberteil 3'a des Oberflansches 3' weist eine durch zwei Ausnehmungen 6', 7' unterbrochene und ansonsten ebene, parallel zum Fußflansch 2' bzw. dessen Oberseite verlaufende Oberseite 9' auf, die außenseitig von schmalen, Richtung Fuß flansch 4 schräg abfallend verlaufenden Randabschnitten 9'a begrenzt ist. Gemäß Fig. 2b sind die Ausnehmungen 6', 7' in Draufsicht jeweils symmetrisch zur Symmetrieebene $E_1$' ausgeführt und bezüglich der Hauptachse $a_1$' zueinander um 180° versetzt, sodass diese einander durch den Spikepin 4' getrennt gegenüberliegen. Die Ausnehmungen 6', 7' erstrecken sich vom Spikepin 4' bis zum Rand des Oberflansches 3', an welchem sie offen enden, und weisen jeweils eine parallel zur Hauptachse $a_1$' ermittelte Tiefe von 0,5 mm bis 2,0 mm auf. Jede Ausnehmung 6', 7' ist in Draufsicht im Wesentlichen U-förmig und durch zwei, jeweils einen Schenkel der U-Form bildende, bis zum Spikepin 4' verlaufende, ebene Begrenzungswände 8' begrenzt. Die Begrenzungswände 8' der Ausnehmung 6' verlaufen in Draufsicht unter einem Winkel $\beta$' von insbesondere bis zu 20° zur Symmetrieebene $E_1$', wobei die Ausnehmung 6' ausgehend vom Spikepin 4' in Richtung ihres offenen Endes am Rand des Oberflansches 3' kontinuierlich breiter wird. Die Begrenzungswände 8' der Ausnehmung 7" verlaufen in Draufsicht im Wesentlichen parallel zur Symmetrieebene $E_1$'. Das Volumen der Ausnehmung 7' ist größer als das Volumen der Ausnehmung 6'. Die unterschiedlichen Volumina der Ausnehmungen 6', 7' sind für deren Funktion als "Eisreservoire" von Vorteil. Dabei wirken die Ausnehmungen 6', 7' als Ableitkanäle oder Reservoire für den Abtransport bzw. die Aufnahme von Eisspänen, die auf eisigen Fahrbahnen bzw. Oberflächen dann entstehen, wenn die Spikes 1' beim Abrollen durch Eis gezogen werden und dabei Rinnen in die Eisoberfläche fräsen. Durch Ausnehmungen 6', 7' wird ein Ansammeln der anfallenden Eisspäne um den jeweiligen Spike 1' vermieden.

Die gewünschte und bevorzugte Orientierung des Spikes 1' im Laufstreifen eines Fahrzeugluftreifen ist derart, dass die Symmetrieebene $E_1$' in Draufsicht in Umfangsrichtung ausgerichtet ist, wobei, bei einem laufrichtungsgebunden gestalteten Laufstreifen, beim Abrollen des Reifens die längere Seitenfläche 2'c, welche bei eingesetztem Spike 1' im Gummi des Laufstreifens eingebettet ist, vor der bei eingesetztem Spike 1' ebenfalls im Gummi des Laufstreifen eingebetteten, kürzeren Seitenfläche 2'd in den Untergrund bzw. in die Bodenaufstandsfläche eintreten soll.

Wie insbesondere Fig. 2a zeigt, ist am unteren Ende des Unterteiles 3'b des Oberflansches 3' zum Fußflansch 2' eine Übergangsrundung 10' ausgebildet, welche im Bereich der Erstreckung der ebenen Seitenfläche 2'a abschnittsweise unterbrochen ist. Im Bereich der Unterbrechung weist der Unterteil 3'b eine speziell verlaufende Begrenzungsfläche 5' auf.

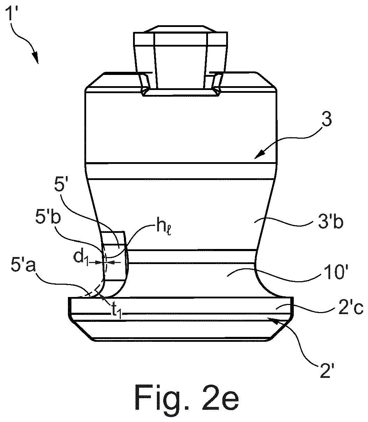

Fig. 2e zeigt den Spike 1' in aufrecht stehender Positionen, wobei eine gestrichelte Hilfslinie $h_1$ eingezeichnet

ist, welche der über die Begrenzungsfläche 5' fortgesetzten, "gedachten", ansonsten vorliegenden Außenkontur des Unterteiles 3'b entspricht. Wie insbesondere Fig. 2e zeigt, begrenzt die Begrenzungsfläche 5'gleichzeitig eine unmittelbar an den Fuß flansch 2' angrenzende, in den Unterteil 3'b hineinragende seichte Vertiefung 5'a sowie eine an diese angrenzende, am Unterteil 3'b ausgebildete Überhöhung 5'b, welche gegenüber der "gedachten" Außenkontur (Hilfslinie $h_1$) ein sehr flacher Vorsprung ist.

Die Vertiefung 5'a ist im Querschnitt im Wesentlichen sichelförmig und weist gegenüber dem Niveau der Übergangsrundung 10' bzw. dem Niveau des Oberflansches 3' an ihrer tiefsten Stelle eine Tiefe $t_1$ von 0,1 mm bis 1,0 mm, insbesondere von bis zu 0,5 mm, auf. Die Überhöhung 5'b weist gegenüber dem Niveau des Oberflansches 3 an ihrer dicksten Stelle eine Dicke $d_1$ von 0,1 mm bis 1,0 mm, insbesondere von bis zu 0,5 mm, auf.

Wie Fig. 2a in Verbindung mit Fig. 2b zeigt, erstreckt sich die Begrenzungsfläche 5' symmetrisch bezüglich einer durch die Hauptachse $a_1$' und orthogonal zu der zur Symmetrieebene $E_1$' verlaufenden Ebene $E_2$'. Beim gezeigten Ausführungsbeispiel erstreckt sich die Begrenzungsfläche 5' in Draufsicht und bezogen auf die Hauptachse $a_1$' über einen Zentriwinkel $\alpha$' von 90°+/- 1°.

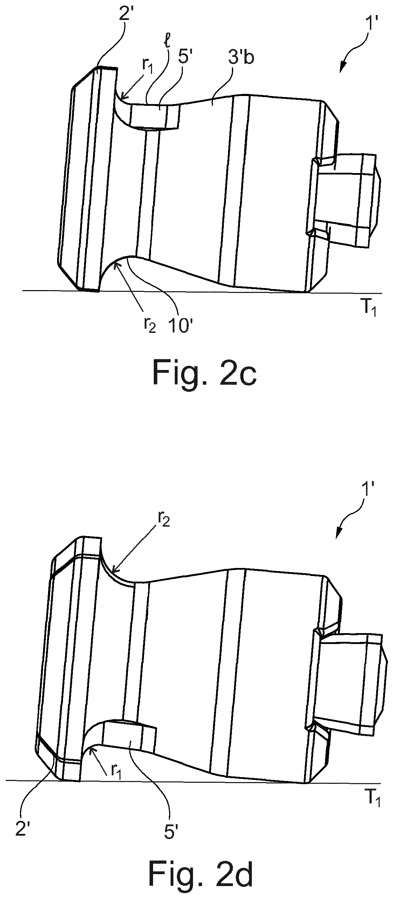

Die Vertiefung 5'a und die Überhöhung 5'b, welche gemeinsam von der Begrenzungsfläche 5' begrenzt sind, bilden miteinander ein Orientierungselement. Fig. 2c und Fig. 2d zeigen die möglichen liegenden Lagen des Spikes 1' auf der zu einem Zuführrohr führenden Transporteinrichtung ($T_1$). Wie ein Vergleich der Fig. 2c mit der Fig. 2d zeigt, verleihen die Vertiefung 5'a und die Überhöhung 5'b dem Spike 1' einen von seiner Lage auf der Transporteinrichtung abhängigen Schattenriss. Die Vertiefung 5'a verleiht dem Schattenriss des Spikes 1'zum Fußflansch 2' einen Radius $r_1$. An der Übergangsrundung 10' weist der Schattenriss des Spikes 1'einen Radius $r_2$ auf, welcher größer ist als der Radius $r_1$. Die Überhöhung 5'b verleiht dem Schattenriss eine an den Radius $r_1$ angrenzende gerade Linie 1. Die Kombination aus Radius $r_1$ und angrenzender Linie 1 ist vom Radius $r_2$ mittels eines Kamerasystems zuverlässig unterscheidbar, sodass nur die für den Setzvorgang korrekt auf der Transporteinrichtung orientierten Spikes 1' zum zur Spikesetzpistole führenden Zuführrohr transportiert werden.

Selbstverständlich ist es zusätzlich möglich, mittels des Kamerasystems den Spike 1 vom Spike 1' aufgrund ihrer unterschiedlichen Schattenrisse voneinander zu unterscheiden, sodass beispielsweise ein in den "falschen" Vorratsbehälter gelangter Spike 1,1' detektierbar ist, bevor er das Zuführrohr zur Spikesetzpistole erreicht. Mittels einer entsprechend ausgeführten und gesteuerten Transporteinrichtung ist es ferner auch möglich, aus einem gemeinsamen Vorratsbehälter Spikes 1 und Spikes 1' zu unterschiedlichen Spikesetzpistolen zu transportieren. Insbesondere ist es daher auf komfortable und zuverlässige Weise möglich, einen Laufstreifen gleichzeitig mit Spikes 1 und Spike 1' zu versehen.

Die Erfindung ist auf die beschriebenen Ausführungsvarianten nicht beschränkt.

Insbesondere können die Orientierungselemente eine von der beschriebenen Gestalt abweichende Gestalt aufweisen und an einer beliebigen Stelle des Oberflansches angeordnet bzw. ausgebildet sein.

Als Orientierungselement kann beispielsweise eine am Rand der Oberseite des Oberflansches ausgebildete Fase vorgesehen sein. Die Fase ist bzw. bildet eine gebogene Schrägfläche, welche im Querschnitt unter einem konstanten Winkel zur Hauptachse des Spikes verläuft und dem Schattenriss des Spikes eine zur Hauptachse schräggestellte Linie verleiht. Eine solche Fase könnte beispielsweise an einem im Wesentlichen kreiszylindrischen Oberflansch, wie er in Fig. 1a gezeigt ist, ausgebildet sein sowie insbesondere eine zu ihren freien Enden abnehmende, im Querschnitt ermittele Breite aufweisen.

Ferner kann das Orientierungselement eine am Rand der Oberseite des Oberflansches ausgebildete, insbesondere umlaufende Abrundung sein, wobei der Radius der Abrundung über den Verlauf der Abrundung ausgehend von der entsprechenden Symmetrieebene gleichmäßig abnimmt. Eine solche Abrundung verleiht dem Schattenriss des Spikes am Rand der Oberseite des Oberflansches einen charakteristischen Radius.

Vorsprünge als Spikeorientierungselemente sind für Spikes bevorzugt, welche einen Oberflansch aus einem Thermoplast oder aus Gummi aufweisen. Solche Spikes weisen außerdem bevorzugter Weise im Inneren des Oberflansches befindliche "Pinhalter", wie beispielsweise aus der WO 2017 088 995 A1 bekannt, oder "Verankerungselemente", wie beispielsweise aus der WO 2017 198 352 A1 bekannt, auf. Vertiefungen als Spikeorientierungselemente sind für Spikes bevorzugt, welche einen Oberflansch aus Metall oder Hartmetall aufweisen.

Die Spikeorientierungselemente erstrecken sich in Draufsicht und bezogen auf die Hauptachse des Spikes bevorzugter Weise über einen Zentriwinkel von $\frac{360}{n} \pm 1°$, wobei gilt: n = 2, 3, 4, 5 oder 6. Solche Spikeorientierungselemente lassen sich mit den üblichen mehrteiligen Oberflanschwerkzeuges auf besonders rationelle Weise ausformen. Die Abweichung von ± 1° gibt einen gewissen fertigungsbedingten Toleranzbereich wieder.

**Bezugsziffernliste**

| | |
|---|---|
| 1, 1’ | Spike |
| 1a, 1b | Spikehälfte |
| 2, 2’ | Fußflansch |
| 2a, 2b, 2’a, 2’b | ebene Seitenfläche |
| 2c, 2d, 2’c, 2’d | gerundete Seitenfläche |
| 3, 3 | Oberflansch |
| 3a | Mantelfläche |
| 3’a | Oberteil |
| 3’b | Unterteil |
| 4, 4’ | Spikepin |
| 5 | Vorsprung |
| 5a | Fläche |
| 5b | Sichelenden |
| 5c | Übergangsfläche |
| 5’ | Begrenzungsfläche |
| 5’a | Vertiefung |
| 5’b | Überhöhung |
| 6’, 7’ | Ausnehmung |
| 8’ | Begrenzungswand |
| 9’ | Oberseite |
| 9’a | Randabschnitt |
| 10’ | Übergangsrundung |
| $a_1$, $a_1$’ | Hauptachse |
| $d_1$ | Dicke |
| $E_1$, $E_1$’, $E_2$ | Symmetrieebene |
| $E_2$’ | Ebene |
| $h_1$ | Hilfslinie |
| $1_1$ | Länge |
| 1 | Linie |
| $P_1$ | Pfeil |
| $r_1$, $r_2$ | Radius |
| $T_1$ | Linie |
| $t_1$ | Tiefe |
| $\alpha$, $\alpha$’ | Zentriwinkel |
| $\beta$’ | Winkel |

## Patentansprüche

1. Spike (1, 1’) zum Verankern im Laufstreifen eines Fahrzeugreifens mit einem Oberflansch (3, 3’), einem Fußflansch (2, 2’) und einem Spikepin (4, 4’),
wobei der Fußflansch (2, 2’) zumindest eine Symmetrieebene ($E_1$, $E_1$’) und zumindest zwei in Draufsicht symmetrisch zur Symmetrieebene ($E_1$, $E_1$’) verlaufende, ebene Seitenflächen (2a, 2b, 2’a, 2’b) aufweist, wobei der Spikepin (4, 4’) und/oder der Oberflansch (3, 3’) bezüglich der Symmetrieebene ($E_1$, $E_1$’) des Fußflansches (2, 2’) und/oder bezüglich einer zu dieser Symmetrieebene ($E_1$, $E_1$’) senkrecht verlaufenden, die Hauptachse ($a_1$, $a_1$’) des Spikes (1, 1’) enthaltenden zweiten Ebene ($E_2$, $E_2$’) asymmetrisch ausgeführt sind bzw. ist,
**dadurch gekennzeichnet,**
**dass** am Oberflansch (3, 3’) des Spikes (1, 1’) zumindest ein Orientierungselement (5; 5’a, 5’b) ausgebildet ist, welches dem auf einer ebenen Seitenfläche (2a, 2b, 2’a, 2b) des Fußflansches (2, 2’) liegenden Spike (1, 1’) einen zur Symmetrieebene ($E_1$, $E_1$’) des Fußflansches (2, 2’) asymmetrischen Schattenriss verleiht.

2. Spike (1, 1’) nach Anspruch 1, **dadurch gekennzeichnet, dass** das am Oberflansch (3, 3’) ausgebildete Orientierungselement (5; 5’a, 5’b) an den Fußflansch (2, 2’) angrenzt.

3. Spike (1) nach Anspruch 1 oder 2, **dadurch gekennzeichnet, dass** das am Oberflansch (3) ausgebildete Orientierungselement (5), in Draufsicht auf den Spike (1), ein den Fußflansch (2) nicht überragender Vorsprung (5) ist.

4. Spike (1) nach Anspruch 3, **dadurch gekennzeichnet, dass** der Vorsprung (5) in Draufsicht auf den Spike (1) sichelförmig ist.

**5.** Spike (1) nach Anspruch 3 oder 4, **dadurch gekennzeichnet, dass** der Vorsprung (5) eine gebogene Fläche (5a) aufweist, welche in der zweiten Ebene ($E_2$) unter einem Winkel zur Hauptachse ($a_1$) des Spikes (1) geneigt ist, wobei der Winkel zu den Sichelenden (5b) der Sichelform des Vorsprunges (5) kontinuierlich abnimmt und wobei die Fläche (5a) an den Sichelenden (5b) über ebene, zur Hauptachse ($a_1$) geneigte Übergangsflächen (5c) tangential in die Mantelfläche des Oberflansches (3) übergeht.

**6.** Spike (1) nach einem der Ansprüche 3 bis 5, **dadurch gekennzeichnet, dass** der Vorsprung (5) an seiner dicksten Stelle eine Dicke ($d_1$) von 0,1 mm bis 1,0 mm, insbesondere von bis zu 0,5mm, aufweist.

**7.** Spike (1') nach Anspruch 1 oder 2, **dadurch gekennzeichnet, dass** das am Oberflansch (3') ausgebildete Orientierungselement (5'a, 5'b) von einer Vertiefung (5'a) und einer vorspringenden Überhöhung (5'b) gebildet ist, wobei die Vertiefung (5'a) und die Überhöhung (5'b) eine gemeinsame Begrenzungsfläche (5') aufweisen.

**8.** Spike (1') nach Anspruch 7, **dadurch gekennzeichnet, dass** die Begrenzungsfläche (5') derart ausgeführt ist, dass die Vertiefung (5'a) im Querschnitt sichelförmig ist und dass die Begrenzungsfläche (5') im Bereich der Überhöhung (5'b) im Querschnitt zumindest abschnittsweise gerade verläuft.

**9.** Spike (1, 1') nach Anspruch 7 oder 8, **dadurch gekennzeichnet, dass** die Vertiefung (5'a) an ihrer tiefsten Stelle eine Tiefe von 0,1 mm bis 1,0 mm, insbesondere von bis zu 0,5 mm, und die Überhöhung (5'b) an ihrer dicksten Stelle eine Dicke ($d_1$) von 0,1 mm bis 1,0 mm, insbesondere von bis zu 0,5 mm, aufweist.

**10.** Spike nach Anspruch 1, **dadurch gekennzeichnet, dass** das am Oberflansch ausgebildete Orientierungselement eine am Rand der Oberseite des Oberflansches ausgebildete, eine Schrägfläche bildende Fase ist.

**11.** Spike nach Anspruch 1, **dadurch gekennzeichnet, dass** das am Oberflansch ausgebildete Orientierungselement eine am Rand der Oberseite des Oberflansches ausgebildete Abrundung ist.

**12.** Spike (1) nach einem der Ansprüche 1 bis 11, **dadurch gekennzeichnet, dass** das am Oberflansch (3) ausgebildete Orientierungselement eine parallel zur Hauptachse ($a_1$) des Spikes (1) ermittelte Länge ($l_1$) von 0,5 mm bis 8,0 mm, insbesondere 2,0 mm bis 5,0 mm aufweist.

**13.** Spike (1, 1') nach einem der Ansprüche 1 bis 12, **dadurch gekennzeichnet, dass** die zweite Ebene ($E_2$, $E_2$') eine Symmetrieebene ($E_2$, $E_2$') des Orientierungselementes (5, 5') ist.

**14.** Spike (1, 1') nach einem der Ansprüche 1 bis 13, **dadurch gekennzeichnet, dass** sich das am Oberflansch (3, 3') ausgebildete Orientierungselement (5, 5'), in Draufsicht auf den Spike (1, 1') und bezogen auf die Hauptachse ($a_1$, $a_1$') des Spikes (1, 1'), über einen Zentriwinkel ($\alpha$, $\alpha$') von 10° bis 180°, insbesondere von mindestens 90°, erstreckt.

**15.** Spike (1, 1') nach einem der Anspruch 14, **dadurch gekennzeichnet, dass** der Zentriwinkel ($\alpha$, $\alpha$'), über welchen sich das Orientierungselement (5, 5') in Draufsicht und bezogen auf die Hauptachse ($a_1$, $a_1$') des Spikes (1, 1') erstreckt, $\frac{360}{n} \pm 1°$, beträgt, wobei gilt: n = 2, 3, 4, 5 oder 6.

## Claims

**1.** Stud (1, 1') for anchoring in the tread of a vehicle tyre, having a top flange (3, 3'), a base flange (2, 2') and a stud pin (4, 4'), wherein the base flange (2, 2') has at least one plane of symmetry ($E_1$, $E_1$') and at least two planar side surfaces (2a, 2b, 2'a, 2'b) which run symmetrically with respect to the plane of symmetry ($E_1$, $E_1$') in plan view, wherein the stud pin (4, 4') and/or the top flange (3, 3') are or is of symmetrical design in relation to the plane of symmetry ($E_1$, $E_1$') of the base flange (2, 2') and/or in relation to a second plane ($E_2$, $E_2$') which runs perpendicular to said plane of symmetry ($E_1$, $E_1$') and which encompasses the principal axis ($a_1$, $a_1$') of the stud (1, 1'),
**characterized**
**in that**, on the top flange (3, 3') of the stud (1, 1'), there is formed at least one orientation element (5; 5'a, 5'b) which provides the stud (1, 1') lying on a planar side surface (2a, 2b, 2'a, 2b) of the base flange (2, 2') with a silhouette which is asymmetrical in relation to the plane of symmetry ($E_1$, $E_1$') of the base flange (2, 2').

2. Stud (1, 1') according to Claim 1, **characterized in that** the orientation element (5; 5'a, 5'b) formed on the top flange (3, 3') adjoins the base flange (2, 2').

3. Stud (1) according to Claim 1 or 2, **characterized in that** the orientation element (5) formed on the top flange (3) is, in a plan view of the stud (1), a projection (5) which does not project beyond the base flange (2).

4. Stud (1) according to Claim 3, **characterized in that** the projection (5) is, in a plan view of the stud (1), of sickle-shaped form.

5. Stud (1) according to Claim 3 or 4, **characterized in that** the projection (5) has a curved surface (5a) which, in the second plane ($E_2$), is inclined at an angle with respect to the principal axis ($a_1$) of the stud (1), wherein the angle decreases continuously towards the sickle ends (5b) of the sickle-shape of the projection (5), and wherein, at the sickle ends (5b), the surface (5a) transitions tangentially into the lateral surface of the top flange (3) via planar transition surfaces (5c) which are inclined relative to the principal axis ($a_1$).

6. Stud (1) according to any of Claims 3 to 5, **characterized in that** the projection (5) has, at its thickest point, a thickness ($d_1$) of 0.1 mm to 1.0 mm, in particular of up to 0.5 mm.

7. Stud (1') according to Claim 1 or 2, **characterized in that** the orientation element (5'a, 5'b) formed on the top flange (3') is formed by a depression (5'a) and a protruding elevation (5'b), wherein the depression (5'a) and the elevation (5'b) have a common delimiting surface (5').

8. Stud (1') according to Claim 7, **characterized in that** the delimiting surface (5') is designed such that the depression (5'a) is of sickle-shaped cross section and **in that** the delimiting surface (5') runs in straight fashion at least in certain portions in cross section in the region of the elevation (5'b).

9. Stud (1, 1') according to Claim 7 or 8, **characterized in that** the depression (5'a) has, at its lowest point, a depth of 0.1 mm to 1.0 mm, in particular of up to 0.5 mm, and the elevation (5'b) has, at its thickest point, a thickness ($d_1$) of 0.1 mm to 1.0 mm, in particular of up to 0.5 mm.

10. Stud according to Claim 1, **characterized in that** the orientation element formed on the top flange is a bevel which is formed at the edge of the top side of the top flange and which forms an oblique surface.

11. Stud according to Claim 1, **characterized in that** the orientation element formed on the top flange is a rounded portion formed at the edge of the top side of the top flange.

12. Stud (1) according to any of Claims 1 to 11, **characterized in that** the orientation element formed on the top flange (3) has a length ($l_1$), measured parallel to the principal axis ($a_1$) of the stud (1), of 0.5 mm to 8.0 mm, in particular 2.0 mm to 5.0 mm.

13. Stud (1, 1') according to any of Claims 1 to 12, **characterized in that** the second plane ($E_2$, $E_2$') is a plane of symmetry ($E_2$, $E_2$') of the orientation element (5, 5').

14. Stud (1, 1') according to any of Claims 1 to 13, **characterized in that** the orientation element (5, 5') formed on the top flange (3, 3') extends, in a plan view of the stud (1, 1') and in relation to the principal axis ($a_1$, $a_1$') of the stud (1, 1'), over a central angle ($\alpha$, $\alpha$') of 10° to 180°, in particular of at least 90°.

15. Stud (1, 1') according to Claim 14, **characterized in that** the central angle ($\alpha$, $\alpha$') over which the orientation element (5, 5') extends in plan view and in relation to the principal axis ($a_1$, $a_1$') of the stud (1, 1') amounts to $\frac{360}{n} \pm 1°$, wherein n = 2, 3, 4, 5 or 6.

**Revendications**

1. Crampon (1, 1') à ancrer dans la bande de roulement d'un pneumatique de véhicule avec une bride supérieure (3, 3'), une bride de base (2, 2') et une pointe (4, 4'),
la bride de base (2, 2') présentant au moins un plan de symétrie ($E_1$, $E_1$') et au moins deux surfaces latérales planes (2a, 2b, 2'a, 2'b) s'étendant de manière symétrique au plan de symétrie ($E_1$, $E_1$') en vue de dessus,
la pointe (4, 4') et/ou la bride supérieure (3, 3') étant réalisée(s) de manière asymétrique par rapport au plan de symétrie ($E_1$, $E_1$') de la bride de base (2, 2') et/ou par rapport à un deuxième plan (E2, E2') contenant l'axe principal ($a_1$, $a_1$') du crampon (1, 1') et s'étendant perpendiculairement à ce plan de symétrie ($E_1$, $E_1$'),
**caractérisé en ce que** sur la bride supérieure (3, 3') du crampon (1, 1'), au moins un élément d'orientation (5 ; 5'a, 5'b) est réalisé qui confère au crampon (1, 1') reposant sur une surface latérale plane (2a, 2b, 2'a, 2b) de la bride de base (2, 2') une silhouette asymétrique au plan de symétrie ($E_1$, $E_1$') de la bride de base (2, 2').

2. Crampon (1, 1') selon la revendication 1, **caractérisé en ce que** l'élément d'orientation (5 ; 5'a, 5'b) réalisé sur la bride supérieure (3, 3') est adjacent à la bride de base (2, 2').

3. Crampon (1) selon la revendication 1 ou 2, **caractérisé en ce que** l'élément d'orientation (5) réalisé sur la bride supérieure (3) est une saillie (5) ne dépassant pas de la bride de base (2), en vue de dessus sur le crampon (1).

4. Crampon (1) selon la revendication 3, **caractérisé en ce que** la saillie (5) présente une forme de croissant en vue de dessus sur le crampon (1).

5. Crampon (1) selon la revendication 3 ou 4, **caractérisé en ce que** la saillie (5) présente une surface courbe (5a) qui est inclinée dans le deuxième plan ($E_2$) selon un angle par rapport à l'axe principal ($a_1$) du crampon (1), l'angle diminuant en continu vers les extrémités de croissant (5b) de la forme de croissant de la saillie (5), et
dans lequel la surface (5a) aux extrémités de croissant (5b) passe tangentiellement à la surface latérale de la bride supérieure (3) en passant par des surfaces de transition (5c) planes, inclinées par rapport à l'axe principal ($a_1$).

6. Crampon (1) selon l'une quelconque des revendications 3 à 5, **caractérisé en ce que** la saillie (5) présente à son endroit le plus épais une épaisseur ($d_1$) de 0,1 mm à 1,0 mm, en particulier jusqu'à 0,5 mm.

7. Crampon (1') selon la revendication 1 ou 2, **caractérisé en ce que** l'élément d'orientation (5'a, 5'b) réalisé sur la bride supérieure (3') est formé par un creux (5'a) et un surhaussement en saillie (5'b), le creux (5'a) et le surhaussement (5'b) présentant une surface de délimitation commune (5').

8. Crampon (1') selon la revendication 7, **caractérisé en ce que** la surface de délimitation (5') est réalisée de telle sorte que le creux (5'a) présente une forme de croissant en section transversale, et **en ce que** la surface de délimitation (5') s'étend au niveau du surhaussement (5'b) en section transversale de manière rectiligne au moins par endroits.

9. Crampon (1, 1') selon la revendication 7 ou 8, **caractérisé en ce que** le creux (5'a) présente à son endroit le plus profond une profondeur de 0,1 mm à 1,0 mm, en particulier jusqu'à 0,5 mm, et le surhaussement (5'b) présente à son endroit le plus épais une épaisseur ($d_1$) de 0,1 mm à 1,0 mm, en particulier jusqu'à 0,5 mm.

10. Crampon selon la revendication 1, **caractérisé en ce que** l'élément d'orientation réalisé sur la bride supérieure est un chanfrein formant une surface inclinée, réalisé sur le bord de la face supérieure de la bride supérieure.

11. Crampon selon la revendication 1, **caractérisé en ce que** l'élément d'orientation réalisé sur la bride supérieure est un arrondi réalisé sur le bord de la face supérieure de la bride supérieure.

12. Crampon (1) selon l'une quelconque des revendications 1 à 11, **caractérisé en ce que** l'élément d'orientation réalisé sur la bride supérieure (3) présente une longueur ($l_1$) de 0,5 mm à 8,0 mm, en particulier de 2,0 mm à 5,0 mm, déterminée en parallèle à l'axe principal ($a_1$) du crampon (1).

13. Crampon (1, 1') selon l'une quelconque des revendications 1 à 12, **caractérisé en ce que** le deuxième plan ($E_2$, $E_2$') est un plan de symétrie ($E_2$, $E_2$') de l'élément d'orientation (5, 5').

14. Crampon (1, 1') selon l'une quelconque des revendications 1 à 13, **caractérisé en ce que** l'élément d'orientation (5, 5') réalisé sur la bride supérieure (3, 3'), en vue de dessus sur le crampon (1, 1') et par rapport à l'axe principal ($a_1$, $a_1$') du crampon (1, 1'), s'étend sur un angle au centre ($\alpha$, $\alpha$') de 10° à 180°, en particulier d'au moins 90°.

**15.** Crampon (1, 1') selon la revendication 14, **caractérisé en ce que** l'angle au centre ($\alpha$, $\alpha$') selon lequel s'étend l'élément d'orientation (5, 5'), en vue de dessus et par rapport à l'axe principal ($a_1$, $a_1$') du crampon (1, 1'), est de $\frac{360}{n} \pm 1°$, où : n = 2, 3, 4, 5 ou 6.

a1
4
1
3
3a
5
2d
5a
2a
2b
2
2c
5c

Fig. 1a

1
2d
4
E1
3
5
2a
5a
E2
2b
2
α
a1
1b
2c
5b
1a
d1

Fig. 1b

1
2c
1b
1a
$a_1$
$T_1$
5
2a
$\ell_1$
$P_1$

Fig. 1c

1
2d
1a
1b
$a_1$
$T_1$
2b
$P_1$

Fig. 1d

4'
7'
1'
9'
9'a
6'
3'a
3'
2'd
3'b
2'b
2'a
2'
5'a
5'
2'c
10'

Fig. 2a

β'
E'1
2'd
7'
1'
8'
4'
3'
2'a
9'
9'a
α'
E'2
5'
2'b
2'
10'
8'
a'1
2'c
6'

Fig. 2b

2'
1'
ℓ
$r_1$
5'
3'b
$r_2$
10'
$T_1$

Fig. 2c

1'
$r_2$
$r_1$
$T_1$
2'
5'

Fig. 2d

1'
3
5'
5'b
$h_\ell$
3'b
$d_1$
5'a
10'
$t_1$
2'c
2'

Fig. 2e

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102015223091 A1
- WO 2015139860 A1
- RU 2152318 C1
- WO 2017088995 A1
- WO 2017198352 A1